# EUROPEAN PATENT SPECIFICATION

(11) **EP 2 942 506 B1**
(45) Date of publication and mention of the grant of the patent: **23.08.2017**
(21) Application number: 13869903.8
(22) Date of filing: 07.01.2013
(51) Int. Cl.: F02B 23/02, F02B 23/10, F02M 61/18, F02B 23/06

(54) **INTERNAL COMBUSTION ENGINE**
VERBRENNUNGSMOTOR
MOTEUR À COMBUSTION INTERNE

(43) Date of publication of application: 11.11.2015
(73) Proprietor: TOYOTA JIDOSHA KABUSHIKI KAISHA, Toyota-shi, Aichi-ken, 471-8571 (JP)
(72) Inventor: MICHIKAWAUCHI, Ryo, Toyota-shi Aichi 471-8571 (JP)
(74) Representative: J A Kemp
(86) International application number: PCT/JP2013/050040
(87) International publication number: WO 2014/106904

(56) References cited:
- EP-A1- 2 039 905
- EP-A1- 2 204 560
- EP-A1- 2 500 543
- JP-A- S62 255 520
- JP-A- S62 255 524
- JP-A- S62 255 524
- JP-A- 2008 038 650
- JP-A- 2008 038 650

## Description

### [TECHNICAL FIELD]

The present invention is related to an internal combustion engine.

### [BACKGROUND ART]

In some cases, parts are commonized between a compression ignition internal combustion engine (for example, diesel engine) and a spark ignition internal combustion engine (for example, gasoline engine), and the commonality of parts is improved. Patent Document 1 discloses a direct injection diesel engine with a cylinder head common to a gasoline engine.

### [PRIOR ART DOCUMENT]

### [PATENT DOCUMENT]

[Patent Document 1] Japanese Unexamined Patent Application Publication No. 11-257089

JP 562 255524 A aims to generate a uniform mixed gas in the entire area of a cavity, by providing an injection nozzle having a plurality of nozzle holes adapted to inject a quantity of fuel corresponding to each volume of plural areas formed by circumferentially partitioning the cavity. In a pent roof type piston, a piston top surface is projected at a portion just over a piston pin hole along the axial direction of the piston pin hole, and the portion is inclined at its both ends. The piston top surface is recessed at its central portion to form a cavity. An injection nozzle is provided over the substantially central portion of the cavity. In the case that the cavity is circumferentially partitioned into a plurality of areas, the injection nozzle is provided with a plurality of nozzle holes exposed to each area and adapted to inject a quantity of fuel corresponding to each volume of the areas. Accordingly, a mixed gas having the same concentration exists in the cavity substantially uniformly as a whole, thereby improving the air utilizing rate to suppress the generation of smoke and increase an output.
JP 2008 038650 A aims to equally mix fuel and air in all circumference direction of a cavity in a fuel direct injection diesel engine provided with a vent roof type piston. Since an angle formed by a first fuel injection axis on which the height of a top surface of a piston is oriented to a highest position and a second and third fuel injection axes adjacent in a direction in which the height of the top surface of the piston gets low in a surface crossing a piston axis at right angles in a view in the piston axis direction is set smaller than an angle formed by the second and third fuel injection axes the volume of a cavity shared by fuel injected along each fuel injection axis is made fixed, mixing condition of fuel and air in the cavity is equalized in a circumference direction, and increase of engine output and reduction of exhaust gas harmful substance can be materialized. Since it is not necessary to change the diameter and number of injection orifices of an injector for that, increase of working cost of the injector can be avoided.

### [SUMMARY OF THE INVENTION]

### [PROBLEMS TO BE SOLVED BY THE INVENTION]

To commonize the cylinder head between the spark ignition internal combustion engine and the compression ignition internal combustion engine or to improve the commonality, each internal combustion engine can be configured such that a bottom wall portion of the cylinder head has a part defining a combustion chamber and having a pent-roof shape. In this case, each internal combustion engine can further have a piston provided with a cavity exposed to the combustion chamber.

However, in a case of generating a swirl flow in the combustion chamber in each internal combustion engine, the bottom wall surface of the cavity has such a shape as to change its height in the flow direction of the swirl flow. Alternatively, the bottom wall surface has such a shape as to change a sectional area of the combustion chamber including a rotation center axis of the swirl flow in the cavity. These things influence the angular velocity of the swirl flow in injecting fuel.

Therefore, in a case of generating the swirling flow in the combustion chamber of each internal combustion engine, it is desired that the fuel injection is performed in consideration of the angular velocity of the swirl flow. Otherwise, an improper interval between fuel sprays adjacently injected in the circumferential direction in the combustion chamber might result in a decrease in combustibility of the air-fuel mixture.

The present invention has been made in view of the above circumstances and has an object to provide an internal combustion engine that injects fuel in consideration of an angular velocity of a swirl flow to suitably inject the fuel to a combustion chamber.

### [MEANS FOR SOLVING THE PROBLEMS]

The present invention is an internal combustion engine as defined in appended claim 1.

### [EFFECTS OF THE INVENTION]

According to the present invention, it is possible to suitably inject fuel to a combustion chamber by performing fuel injection in consideration of an angular velocity of a swirl flow.

### [BRIEF DESCRIPTION OF THE DRAWINGS]

FIG. 1 is a schematic configuration view of an internal combustion engine;
FIG. 2 is a view of the internal combustion engine when viewed in a cross-section taken along line A-A of FIG. 1;
FIG. 3 is a view illustrating an injection hole portion;
FIG. 4 is an external view of a piston;
FIG. 5 is a top view of the piston;
FIG. 6 is a view of the piston when viewed in a cross-section taken along line B-B of FIG. 5;
FIG. 7 is a view of the piston when viewed in a cross-section taken along line C-C of FIG. 5;
FIG. 8 is a first view illustrating a change in each parameter;
FIG. 9 is an explanatory view of a bottom wall surface corresponding to FIG. 8;
FIG. 10 is an explanatory view of a combustion chamber corresponding to FIGs. 8 and 9;
FIG. 11 is a first explanatory view of injection hole intervals;
FIG. 12 is a view illustrating a variation of the internal combustion engine;
FIG. 13 is a view illustrating a variation of the piston;
FIG. 14 is a second view illustrating a change in each parameter; and
FIG. 15 is a second explanatory view of injection hole intervals.

### [MODES FOR CARRYING OUT THE INVENTION]

An embodiment according to the present invention will be described with reference to the drawings.

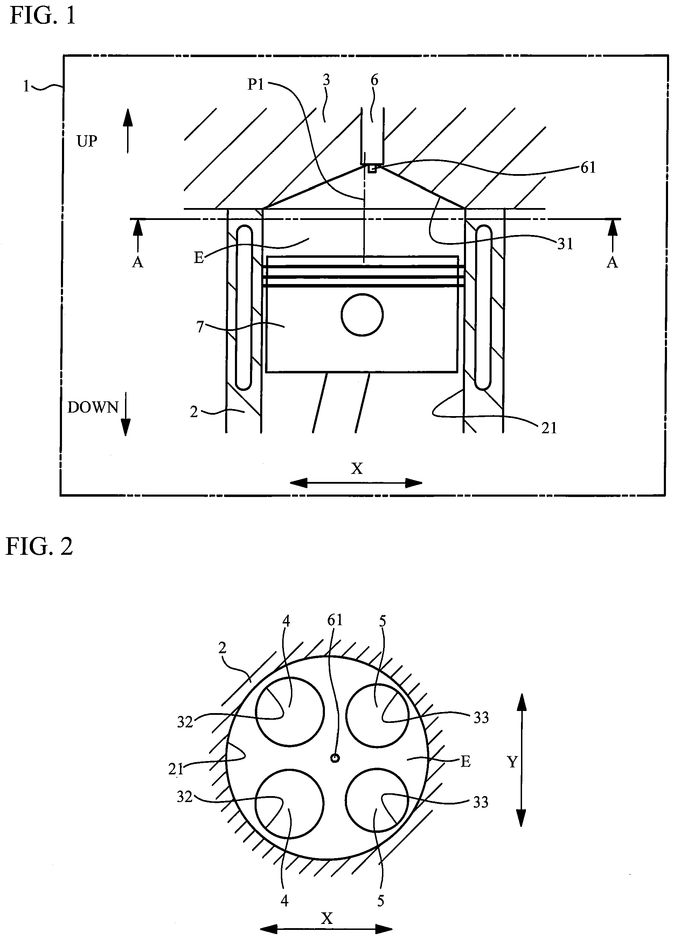

FIG. 1 is a schematic configuration view of an internal combustion engine 1. FIG. 2 is a view of the internal combustion engine 1 when viewed in a cross-section taken along line A-A of FIG. 1. FIG. 1 illustrates a cylinder block 2 and a cylinder head 3 of the internal combustion engine 1 in a cross-section including a central axis P1 that is a central axis of a combustion chamber E. As for an upward and downward direction in the internal combustion engine 1, as illustrated in FIG. 1, it is assumed that the upward and downward direction in the internal combustion engine 1 is the direction along the central axis P1 and that the cylinder head 3 is located above the cylinder block 2. The direction X illustrated in FIG. 1 and FIG. 2 indicates the intake and exhaust direction of the internal combustion engine 1. The Y direction illustrated in FIG. 2 indicates the front and rear directions of the internal combustion engine 1. FIG. 1 and FIG. 2 illustrate each simplified component.

The internal combustion engine 1 is a compression ignition internal combustion engine, and is an internal combustion engine in which a swirl flow is generated in the combustion chamber E. The internal combustion engine 1 includes the cylinder block 2, the cylinder head 3, intake valves 4, exhaust valves 5, a fuel injection valve 6, and a piston 7. A cylinder 21 is formed in the cylinder block 2. The cylinder 21 has the central axis P1. In other words, the cylinder 21 defines the central axis P1. The piston 7 is housed in the cylinder 21. The cylinder head 3 is secured to an upper portion of the cylinder block 2.

The cylinder head 3 defines the combustion chamber E in conjunction with the cylinder block 2 and the piston 7. In a bottom wall portion of the cylinder head 3, a central portion 31 that is a portion defines the combustion chamber E has a pent-roof shape. Specifically, the pent-roof shape is configured to have a top portion located off the central axis P1 toward the exhaust side in the direction X. The central portion 31 may have a pent-roof shape with the top portion that is located at the central axis P1 in the direction X or off the central axis P1 toward the intake side.

Intake ports 32 and exhaust ports 33 are formed in the cylinder head 3. Further, the intake valves 4 and the exhaust valves 5 are provided. Both the intake ports 32 and the exhaust ports 33 open to the combustion chamber E.
The intake ports 32 introduce intake air into the combustion chamber E, and the exhaust ports 33 exhaust gas from the combustion chamber E. The intake valve 4 opens and closes the intake port 32, and the exhaust valve 5 opens and closes the exhaust port 33.

Specifically, plural pairs (two pairs in this case) of the intake port 32 and the intake valve 4 are provided corresponding to the combustion chamber E. Also, plural pairs (two pairs in this case) of the exhaust port 33 and the exhaust valve 5 are provided corresponding to the combustion chamber E. Each intake port 32 may be an independent port independent of each other, or may be a part of a Siamese port which branches off partway and opens to the combustion chamber E. The specific shape of the intake ports 32 may be different from each other. These things are the same as each exhaust port 33.

The fuel injection valve 6 is further provided in the cylinder head 3. The fuel injection valve 6 injects fuel into the combustion chamber E. The fuel injection valve 6 includes an injection hole portion 61. The injection hole portion 61 is exposed from the central portion of the upper portion of the combustion chamber E. The position of the fuel injection valve 6 in the direction X is set to match the top portion of the pent-roof shape of the central portion 31. Therefore, specifically, the fuel injection valve 6 is provided at a position off the central axis P1 toward the exhaust side in the direction X.

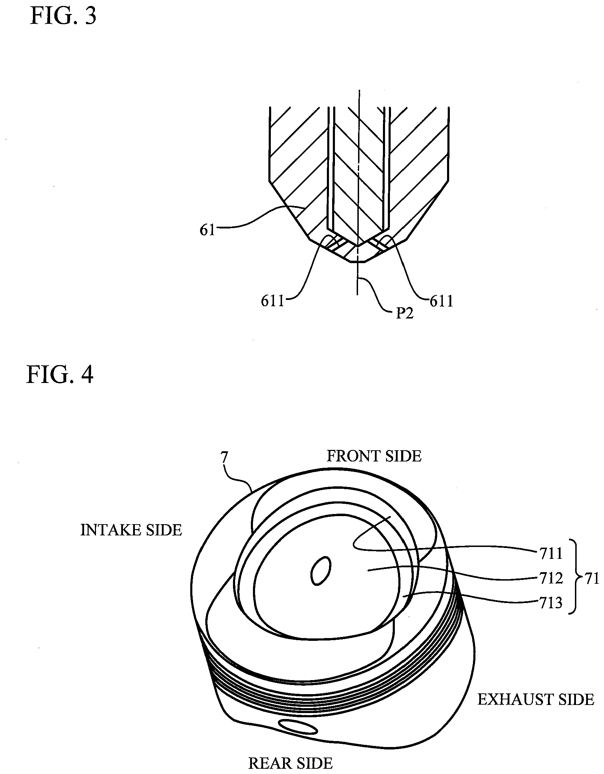

FIG. 3 is a view illustrating the injection hole portion 61. Injection holes 611 are provided in the injection hole portion 61. The injection hole portion 61 is a portion where the injection holes 611 are provided, and has a central axis P2. The injection hole portion 61 is specifically an end portion of a nozzle body provided in the fuel injection valve 6. The plural injection holes 611 (eight in this case) are provided in the injection hole portion 61 in the circumferential direction. The number of the plural injection holes 611 can be even.

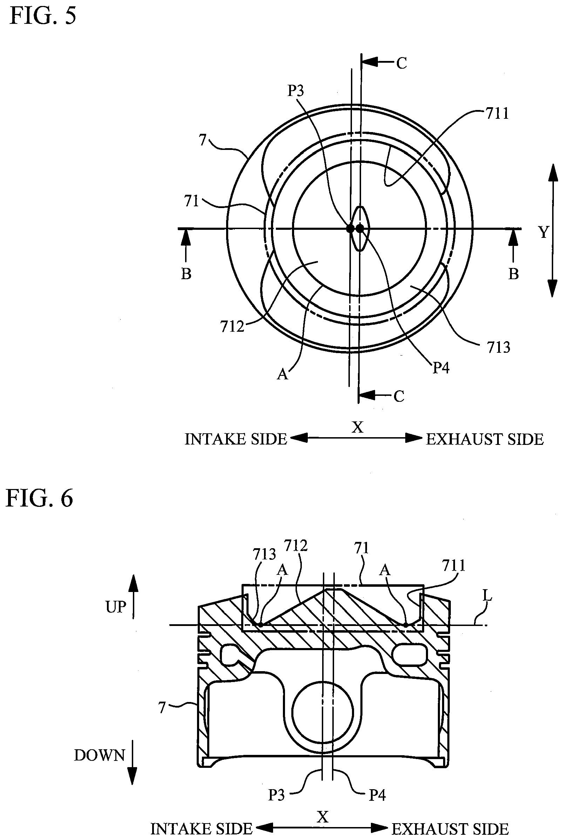

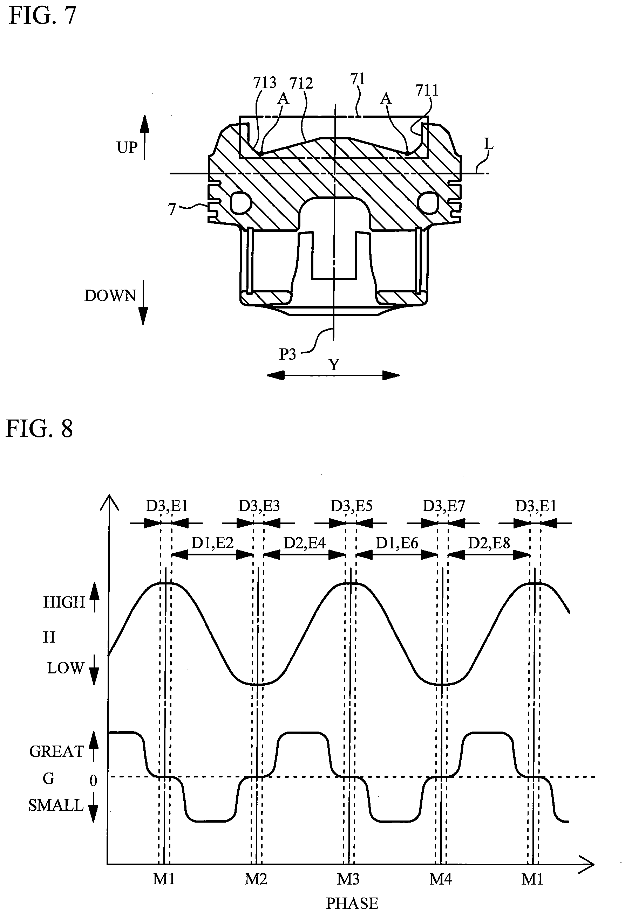

FIG. 4 is an external view of the piston 7. FIG. 5 is a top view of the piston 7. FIG. 6 is a view of the piston 7 when viewed in a cross-section taken along line B-B of FIG. 5. FIG. 7 is a view of the piston 7 when viewed in a cross-section taken along line C-C of FIG. 5. FIG. 4 to FIG. 7 illustrate the direction of the piston 7 in the internal combustion engine 1 by indicating the intake side, the exhaust side, the front side, and the rear side, and in addition to the upward and downward direction, the X direction, and the direction Y in the internal combustion engine 1. In the following description, the piston 7 will be described in consideration of the state thereof in the internal combustion engine 1. Therefore, in the following description, the piston 7 will be described according to these indications as needed.

The piston 7 has a cavity 71. The cavity 71 is provided at the top portion of the piston 7. Therefore, the cavity 71 is exposed to the combustion chamber E in the internal combustion engine 1. The position of the cavity 71 in the direction X is set corresponding to the fuel injection valve 6. Therefore, the cavity 71 is provided at a position off the central axis P3 of a central axis of the piston 7 toward the exhaust side in the direction X. In the internal combustion engine 1, the piston 7 is provided such that the central axis P3 and the central axis P1 are located in the same position. Sameness can include difference between them within the manufacturing error range. Sameness also can include difference between them within as long as the present invention can have effects. The same applies hereinafter.

The cavity 71 includes a circumferential edge portion 711, a bottom wall surface 712, and an intermediate portion 713. The circumferential edge portion 711 has a cylindrical shape. The circumferential edge portion 711 is not always limited to have a cylindrical shape, for example, may have an elliptic cylindrical shape. The circumferential edge portion 711 has a central axis P4 that is the central axis of the cavity 71. In other words, the circumferential edge portion 711 defines the central axis P4.

The central axis P4 extends along the central axis P3. The central axis P4 corresponds to the rotation center axis of a swirl flow in the cavity 71. The central axis P4 is set at a position off the central axis P3 toward the exhaust side in the direction X. Specifically, the central axis P4 is set at the same position as the central axis P2 in the internal combustion engine 1.

The bottom wall surface 712 has a protruding shape. This shape is not axial symmetric with respect to the central axis P3, but axial symmetric with respect to the central axis P4. The bottom wall surface 712 shares the central axis P4 with the circumferential edge portion 711. The bottom wall surface 712 may not always share the central axis P4 with the circumferential edge portion 711. The intermediate portion 713 is provided between the circumferential edge portion 711 and the bottom wall surface 712, and connects the circumferential edge portion 711 with the bottom wall surface 712. The intermediate portion 713 includes an adjacent portion A adjacent to the bottom wall surface 712.

In the bottom wall surface 712, specifically, in each cross-section of the piston 7 including the central axis P4 (for example, the cross-section illustrated in FIG. 6 or FIG. 7), one side and the other side sandwiching the central axis P4 are provided to each protrude from the height of the adjacent portion A. In each cross-section of the piston 7 including a central axis P4, the adjacent portions A respectively sandwiching the central axis P4 specifically have the same height.

In each cross-section, the adjacent portions A sandwiching the central axis P4 are further specifically portions lowest in the surface of the cavity 71. The positions of the adjacent portions A sandwiching the central axis P4 is higher in the cross-section illustrated in FIG. 7 than in the cross-section illustrated in FIG. 6. In each cross-section of the piston 7 including the central axis P4, the adjacent portions A sandwiching the central axis P4 may not always have the same height.

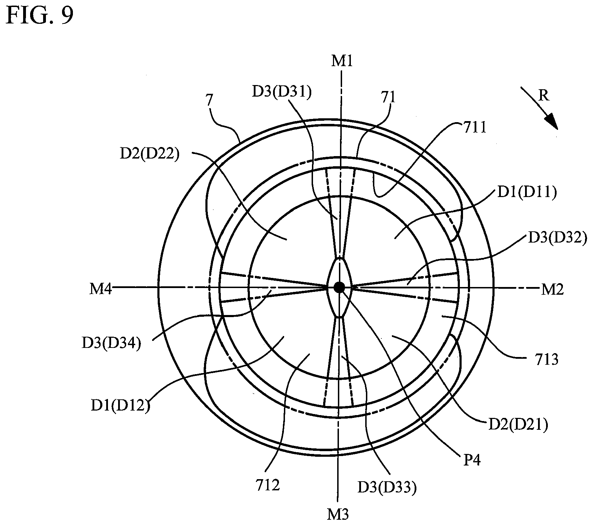

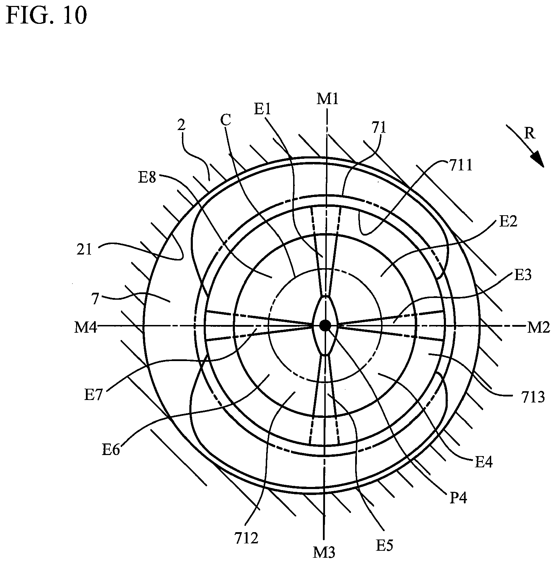

Next, the bottom wall surface 712 will be further described with reference to FIG. 8, FIG. 9, and FIG. 10. FIG. 8 is a first view illustrating a change in each parameter. FIG. 9 is an explanatory view of the bottom wall surface 712 corresponding to FIG. 8. FIG. 10 is an explanatory view of the combustion chamber E corresponding to FIG. 8 and FIG. 9.

FIG. 8 illustrates a height H and a gradient G as each parameter. The height H is the height of the bottom wall surface 712, specifically, the height with respect to a virtual plane L (see FIG. 6 and FIG. 7) perpendicular to the central axis P4 and located below the bottom wall surface 712. The gradient G is a gradient of the bottom wall surface 712, specifically, the gradient of the bottom wall surface 712 in the flow direction of the swirl flow. The horizontal axis illustrated in FIG. 8 indicates a phase (angular position) of which the rotational center is the central axis P4. FIG. 8 illustrates decrease portions D1, increase portions D2, and intermediate portions D3 to be described later, and regions E1 to E8 to be described later. The direction R illustrated in FIG. 9 and FIG. 10 indicates the rotational direction of the swirl flow.

A change in each parameter illustrated in FIG. 8 is in the flow direction of the swirl flow. A phase M1 indicates a phase center in the front side as the rotational center of the phase is the central axis P4. A phase M2, a phase M3, and a phase M4 respectively indicate phase centers in the exhaust, rear, and intake sides of the phase. The change, in the flow direction of the swirl flow, means specifically as follows: that is, a locus of the swirl flow corresponds to the shape of the circumferential edge portion 711 in the cavity 71 herein.

Thus, the change, in the flow direction of the swirl flow, means a change, in the direction of the outline of the circumferential edge portion 711. This change specifically means a change corresponding to the phase of which the rotational center is the central axis P4 and observed along a virtual locus C (See FIG. 10) of the swirl flow in accordance with the shape of the circumferential edge portion 711. The virtual locus C specifically shares the central axis P4 with the circumferential edge portion 711, and has a ring shape analogous to the outline of the circumferential edge portion 711 viewed along the central axis P4.

The bottom wall surface 712 has such a shape as to change its height H in the flow direction of the swirl flow. This bottom wall surface 712 is specifically a bottom wall surface including the decrease portions D1, the increase portions D2, and the intermediate portions D3 to be described below.

The decrease portions D1 are located within the range from the phase M1 to the phase M2 in the direction R and within the range from the phase M3 to the phase M4 in the direction R. A decrease portion D11 means the decrease portion D1 located within the former range, and a decrease portion D12 means the decrease portion D1 located within the latter range. The reduction portion D1 is a portion to decrease its height H in the direction R.

The increase portion D2 are located within the range from the phase M2 to the phase M3 in the direction R and within the range from the phase M4 to the phase M1 in the direction R. An increase portion D21 means the increase portion D2 located within the former range, and an increase portion D22 means the increase portion D2 located within the latter range. The increase portion D2 is a portion to increase its height H in the direction R.

The intermediate portions D3 are located to respectively correspond to the phase M1, the phase M2, the phase M3, and the phase M4. An intermediate portion D31 means the intermediate portion D3 located to correspond to the phase M1. An intermediate portion D32, an intermediate portion D33, and an intermediate portion D34 mean the intermediate portions D3 located to correspond to the phase M2, the phase M3, and the phase M4, respectively. The intermediate portion D3 is adjacent to the decrease portion D1 and the increase portion D2 in the direction R, and connect the adjacent decrease portion D1 and increase portion D2. The intermediate portion D3 is a portion where its height H is constant in the direction of the swirl flow.

The intermediate portion D3 may be a change portion to change a change degree of its height H between the adjacent decrease portion D1 and increase portion D2. The bottom wall surface 712 may be provided with an edge portion formed by the adjacent decrease portion D1 and increase portion D2, instead of the intermediate portion D3. In this case, the gradient G of the edge portion can be assumed to be zero.

The top portion of the bottom wall surface 712 has a flat shape. Thus, in the bottom wall surface 712, the portion other than the top portion has such a shape as to change the height H in the flow direction of the swirl flow. Like the bottom wall surface 712, the surface of the intermediate portion 713 also includes the decrease portions D1, the increase portions D2, and the intermediate portions D3. The bottom wall surface 712 can be a portion further including the surface of the intermediate portion 713.

The combustion chamber E has the plural regions E1 to E8. The region E1 to the region E8 present above the cavity 71. The region E1 is a region adjacent to the intermediate portion D31. A region E2, a region E3, a region E4, a region E5, a region E6, a region E7, and the region E8 are adjacent to the decrease portion D11, the intermediate portion D32, the increase portion D21, the intermediate portion D33, the decrease portion D12, the intermediate portion D34, and the increase portion D22, respectively.

The downward component of the angular velocity of the swirl flow influenced by the decrease portions D1 results in that the region E2 and the region E6 are regions where the angular velocity of the swirl flow is accelerated by the fuel injection. The upward component of the angular velocity of the swirl flow influenced by the increase portions D2 results in that the region E4 and the region E8 are regions where the angular velocity of the swirl flow is decelerated by the fuel injection.

Thus, each pair of the region E1 and the region E2, the region E4 and the region E5, the region E5 and the region E6, and the region E8 and the region E1, configures regions in which angular velocities of the swirl flow are respectively low and high are located in this order in the direction R in injecting the fuel. Also, each pair of the region E2 and the region E3, the region E3 and the region E4, the region E6 and the region E7, and the region E7 and the region E8, configures regions in which angular velocities of the swirl flow are respectively high and low are located in this order in the direction R in injecting the fuel.

Among the region E1 to the region E8, between the regions E1 and E2 of the angular velocities of the swirl flow compared with each other in injecting the fuel as mentioned above, the region E1 in which the angular velocity of the swirl flow is slow is adjacent to the intermediate portion D31, and the region E2 in which the angular velocity of the swirl flow is high is adjacent to the decrease portion D11. The gradient G is greater in the intermediate portion D31 than in the decrease portion D11. Between the regions E1 and E2, the intermediate portion D31 and the decrease portion D11 respectively correspond to a first portion and a second portion. Each pair of the region E4 and the region E5, the region E5 and the region E6, and the region E8 and the region E1 have the same arrangements.

Among the region E1 to the region E8, between the regions E2 and E3 of the angular velocities of the swirl flow compared with each other in injecting the fuel as mentioned above, the region E2 in which the angular velocity of the swirl flow is high is adjacent to the decrease portion D11, and the region E3 in which the angular velocity of the swirl flow is low is adjacent to the intermediate portion D32. The gradient G is smaller in the decrease portion D11 than in the intermediate portion D32. Between the regions E2 and E3, the decrease portion D11 and the intermediate portion D32 respectively correspond to a second portion and a first portion. Each pair of the region E3 and the region E4, the region E6 and the region E7, and the region E7 and the region E8 have the same arrangements.

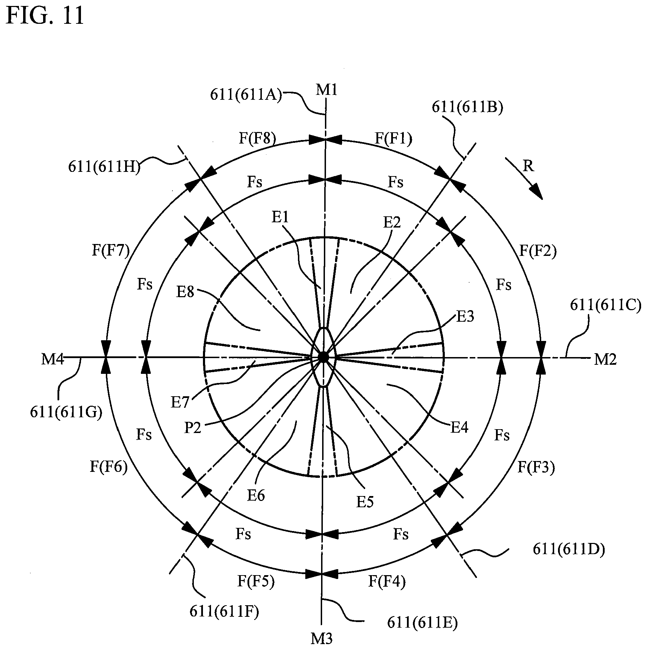

FIG. 11 is a first explanatory view of intervals F. In FIG. 11, the plural injection holes 611 are illustrated by central axes thereof. The plural injection holes 611 are arranged to correspond to the region E1 to the region E8. An injection hole 611A indicates the injection hole 611 for injecting the fuel to the region E1. An injection hole 611B, an injection hole 611C, an injection hole 611D, an injection hole 611E, an injection hole 611F, an injection hole 611G, and an injection hole 611H indicate the injection holes 611 for injecting the fuel to the region E2, the region E3, the region E4, the region E5, the region E6, the region E7, and the region E8, respectively.

The interval F is an injection hole interval between two adjacent injection holes of the injection holes 611. The interval F is specifically an interval of a phase of rotational about the central axis P2. An interval F1 indicates the interval F between the injection holes 611A and 611B. An interval F2, an interval F3, an interval F4, an interval F5, an interval F6, an interval F7, and an interval F8 indicate the intervals F between the injection holes 611B and 611C, between the injection holes 611C and 611D, between the injection holes 611D and 611E, between the injection holes 611E and 611F, between the injection holes 611F and 611G, between the injection holes 611G and 611H, and between the injection holes 611H and 611 A, respectively.

Reference intervals Fs are injection hole intervals when the swirl flow is not generated in the combustion chamber E, and this injection hole interval is specifically an injection hole interval set such that fuel sprays injected from the plural injection holes 611 are arranged at even intervals in the flow direction of the swirl flow. For this reason, the reference intervals Fs are specifically equal to one another.

The reference intervals Fs corresponding to two of the intervals F (for example, the reference interval Fs corresponding to the interval F1 and the reference interval F2 corresponding to the interval Fs) may differ from each other. In a case where the reference intervals Fs differ from one another, respective correlations between the reference intervals Fs and the intervals F can be grasped below.

That is, to set the reference intervals Fs in this case, the plural injection holes 611 are arranged symmetrically with each of a plane that includes a line connecting the phase M1 with the phase M3 and the central axis P2 and a plane that includes a line connecting the phase M2 with the phase M4 and the central axis P2.

The plural injection holes 611 arranged in such a way are specifically arranged in any of the first and second arrangements to be described below. In the first arrangement, the phase of any of the central axes of the plural injection holes 611 is set to any of the phase M1, the phase M2, the phase M3, and the phase M4. In the second arrangement, the phases of the central axes of the plural injection holes 611 are set to the phases other than the phase M1, the phase M2, the phase M3, and the phase M4.

In a case where the reference intervals Fs differ from one another, the respective correlations between the reference intervals Fs and the intervals F can be grasped by comparing the respective reference intervals Fs, corresponding to any of the first and second arrangements (in this case, the first arrangement), with the respective intervals F. To select any of the first and second arrangements, which is closer to the arrangements of the plural injection holes 611 set at the intervals F can be selected. Also, the same is true in a case where plural first arrangements or plural second arrangements are supposed.

The injection holes 611A and 611B are two adjacent injection holes of the plural injection holes 611, and two injection holes for respectively injecting the fuel to the region E1 and the region E2. A magnitude relationship between the angular velocities of the swirl flow in the region E1 and the region E2 is mentioned above. Meanwhile, the interval F1 is set to be smaller than the reference interval Fs. The interval F4, the interval F5, and the interval F8 have the same arrangements.

The injection holes 611B and 611C are two adjacent injection holes of the plural injection holes 611, and two injection holes for respectively injecting the fuel to the region E2 and the region E3. A magnitude relationship between the angular velocities of the swirl flow in the region E2 and the region E3 is mentioned above. The interval F2 is set to be larger than the reference interval Fs. The interval F3, the interval F6, and the interval F7 have the same arrangements. The intervals F set in this manner are set based on the respective gradients G.

Next, the main effects of the internal combustion engine 1 will be described. In the internal combustion engine 1, the interval F1, the interval F4, the interval F5, and the interval F8 are set to be smaller than the respective reference intervals Fs. Thus, the internal combustion engine 1 can respectively correct positions of the fuel sprays carried by the swirl flow accelerated by the fuel injection into appropriate positions. Further, in the internal combustion engine 1, the interval F2, the interval F3, the interval F6, and the interval F7 are set to be wider than the respective reference intervals Fs. Thus, the internal combustion engine 1 can respectively correct positions of the fuel sprays carried by the swirl flow decelerated by the fuel injection into appropriate positions.

That is, by setting the intervals F in consideration of the angular velocity of the swirl flow in injecting the fuel, the internal combustion engine 1 can inject the fuel in consideration of the angular velocity of the swirl flow in injecting the fuel. As a result, the fuel is suitably injected to the combustion chamber E.

The internal combustion engine 1 can be configured to include, specifically, the piston 7 provided with the cavity 71, and the cavity 71 provided with the bottom wall surface 712. Also in this case, the internal combustion engine 1 can be configured as follows. Between the two regions, among the region E1 to the region E8, of the angular velocities of the swirl flow compared with each other in injecting the fuel, the region in which the angular velocity of the swirl flow is low is adjacent to a first portion of the bottom wall surface 712, the region in which the angular velocity of the swirl flow is high is adjacent to a second portion of the bottom wall surface 712, and the gradient G is greater in the first portion than in the second portion.

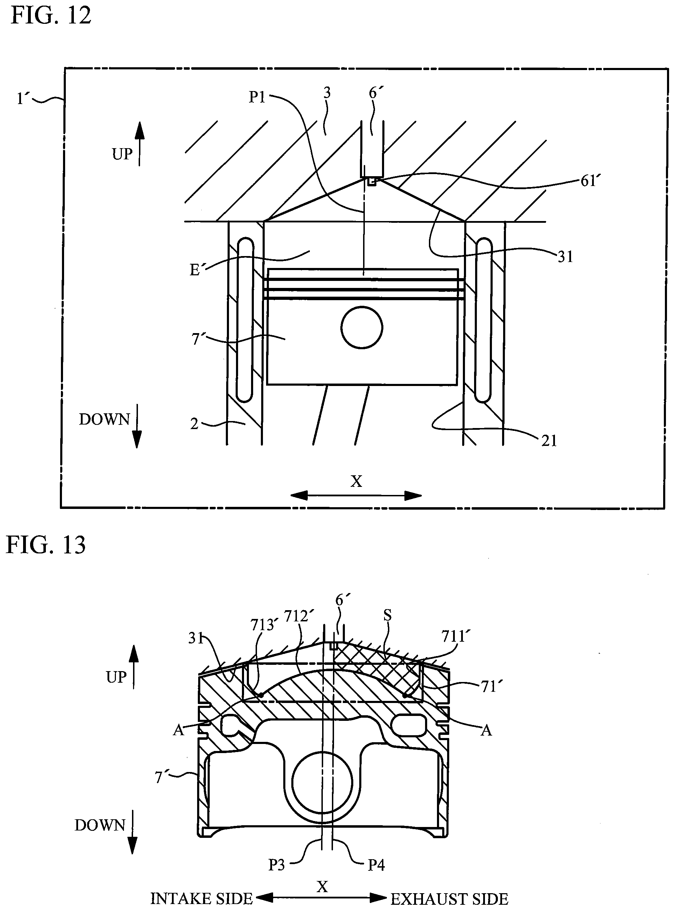

For example, the internal combustion engine 1 may be configured as follows. FIG. 12 is a view illustrating an internal combustion engine 1' according to a variation of the internal combustion engine 1. FIG. 13 is a view illustrating a piston 7' according to a variation of the piston 7. FIG. 12 illustrates the internal combustion engine 1' as well as FIG. 1. FIG. 13 further illustrates the central portion 31 and a fuel injection valve 6' as well as FIG. 6. The internal combustion engine 1' is the same as the internal combustion engine 1, except that the piston 7' is provided instead of the piston 7, that a combustion chamber E' is provided instead of the combustion chamber E, and that the fuel injection valve 6' is provided instead of the fuel injection valve 6.

The piston 7' is the same as the piston 7 except that a cavity 71' is provided instead of the cavity 71. The cavity 71' is the same as the cavity 71, except that a circumferential edge portion 711', a bottom wall surface 712', and an intermediate portion 713' are provided instead of the circumferential edge portion 711, the bottom wall surface 712, and the intermediate portion 713. The combustion chamber E' is the same as the combustion chamber E, except that a spatial shape is provided corresponding to the shape of the cavity 71' instead of the cavity 71.

The circumferential edge portion 711' is the same as the circumferential edge portion 711, except that the height of a lower end portion of the circumferential edge portion 711' is constant in the flow direction of the swirl flow. Like the bottom wall surface 712, the bottom wall surface 712' has a protrusion shape. On the other hand, this shape is a shape axially symmetric with respect to the central axis P4. This shape is specifically a shape of a partial spherical portion.

The bottom wall surface 712' has such a shape as to have the constant height H in the flow direction of the swirl flow. On the other hand, the bottom wall surface 712' has such a shape as to have change the cross-sectional area S of the combustion chamber E' in the flow direction of the swirl flow. In a state where the piston 7' is positionally fixed, the cross-sectional area S is an area of a portion, of the combustion chamber E', located in any one side from the central axis P4 in the radial direction.

The intermediate portion 713' is the same as the intermediate portion 713, except that the height of the intermediate portion 713' is constant in the flow direction of the swirl flow. The bottom wall surface 712' can further include a surface of the intermediate portion 713'.

The fuel injection valve 6' is the same as the fuel injection valve 6, except that an injection hole portion 61' is provided instead of the injection hole portion 61. The injection hole portion 61' is the same as the injection hole portion 61, except that the intervals F are set in a manner different from the manner in the case of the internal combustion engine 1.

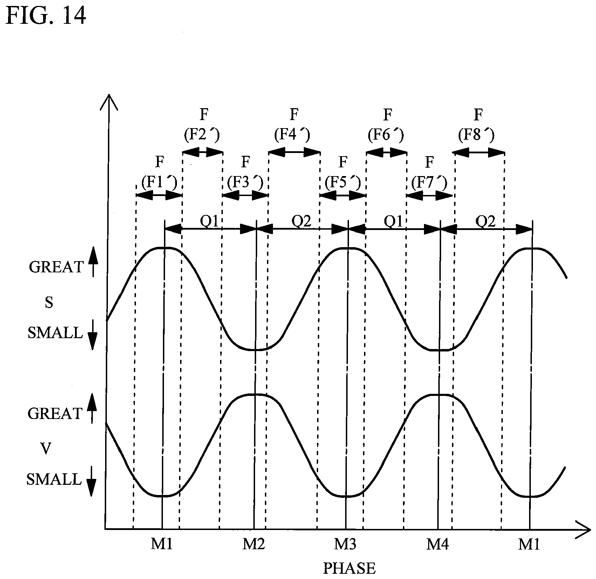

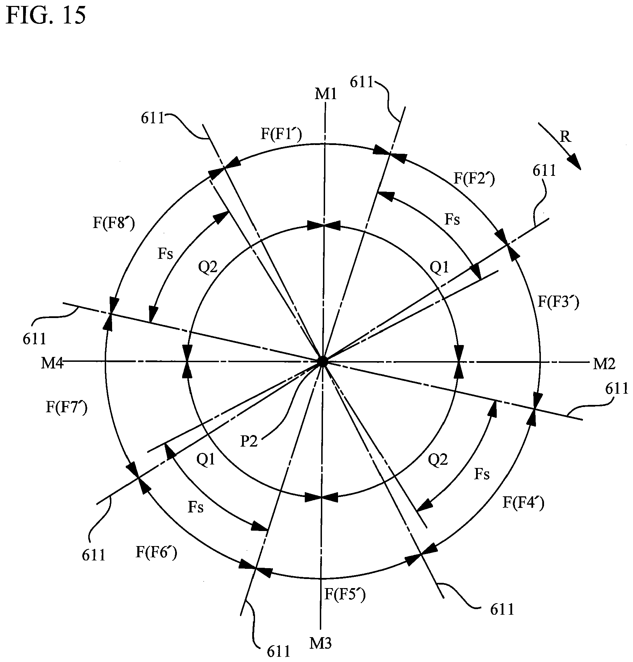

FIG. 14 is the second view of changes in various parameters. FIG. 15 is the second explanatory view of the intervals F. FIG. 14 illustrates the cross-sectional area S and the angular velocity V as the various parameters. The velocity V is the velocity of the swirl flow in the internal combustion engine 1'. Changes in the various parameters illustrated in FIG. 14 are in the flow direction of the swirl flow. FIG. 14 illustrates an interval F1' to an interval F8' illustrated in FIG. 15 and phase ranges Q1 and phase ranges Q2 illustrated in FIG. 15. The interval F1' to the interval F8' are each set as the interval F in the internal combustion engine 1.

In the internal combustion engine 1', the cross-sectional area S changes, in the flow direction of the swirl flow. As a result, the angular velocity V is faster in the phase in which the cross-sectional area S is relatively small than in the phase in which the cross-sectional area S is relatively large. Each interval F is set based on the cross-sectional area S in the internal combustion engine 1'. Like the internal combustion engine 1, the reference intervals Fs are set in the internal combustion engine 1'.

In the internal combustion engine 1', the phase centers of the regions to which the plural injection holes 611 inject the fuel are grasped based on the phases setting the central axes of the plural injection holes 611, respectively. Thus, each phase setting the interval F1' is the phase center of the regions to which the two adjacent injection holes of the plural injection holes 611 respectively inject the fuel. Each of the phases setting the interval F2' to the interval F8' has the same arrangements.

Each phase setting the interval F2' and each phase setting the interval F6' are set within the phase range between the phase ranges Q2 in which the angular velocities V tend to decrease. Each phase setting the interval F4' and each phase setting the interval F8' are set within the phase range between the phase ranges Q1 in which the angular velocities V tend to increase.

The phase range between the phase ranges Q2 means a phase range composed of the phases respectively corresponding to the phase ranges Q1 and adjacent inflection points of the angular velocity V. The phase range between the phase ranges Q1 means a phase range composed of the phases respectively corresponding to the phase ranges Q2 and adjacent inflection points of the angular velocity V.

The interval F2' and the interval F6' are injection hole intervals between two adjacent injection holes of the plural injection holes 611. The two adjacent injection holes respectively inject the fuel to regions, of the combustion chamber E', in which the angular velocities V of the swirl flow are respectively low and high are located in this order in the rotational direction R of the swirl flow in injecting the fuel.

The interval F4' and the interval F8' are injection hole intervals between two adjacent injection holes of the plural injection holes 611. The two adjacent injection holes respectively inject the fuel to regions, of the combustion chamber E', in which the angular velocities V of the swirl flow are respectively high and low are located in this order in the rotational direction R of the swirl flow in injecting the fuel.

Between the phases setting the interval F2', the cross-sectional area S is relatively greater in the phase in which the angular velocity V is slow in injecting the fuel than in the phase in which the angular velocity V is high in injecting the fuel. The interval F4', the interval F6', and the interval F8' have the same arrangements.

By setting each interval F in consideration of the angular velocity V in injecting the fuel, the fuel injection can be also performed in consideration of the angular velocity V in injecting the fuel in the internal combustion engine 1. A result, the fuel can be suitably injected to the combustion chamber E'.

Instead of a partially spherical shape, the bottom wall surface 712' can have such a shape as to axially symmetrical with respect to the central axis P4 and to change its height H in the flow direction of the swirl flow. In this case, each interval F can be also set based on the gradient G. Each interval F can be set based on at least one of any of the gradient G and the cross-sectional area S.

While the exemplary embodiments of the present invention have been illustrated in detail, the present invention is not limited to the above-mentioned embodiments, and other embodiments, variations and modifications may be made without departing from the scope of the present invention.

For example, the internal combustion engine may be a spark ignition internal combustion engine. Further, the bottom wall surface does not necessary have a protruding shape, but has, for example a flat shape or a recess shape

In the internal combustion engine to which the present invention is applied, the cylinder head is not necessary produced for the purpose of being communized between the spark ignition internal combustion engine and the compression ignition internal combustion engine or improving the commonality.

**[DESCRIPTION OF LETTERS OR NUMERALS]**

| | |
|---|---|
| internal combustion engine | 1, 1' |
| fuel injection valve | 6, 6' |
| injection hole portion | 61, 61' |
| piston | 7, 7' |
| cavity | 71, 71' |
| bottom wall surface | 712, 712' |

## Claims

1. An internal combustion engine (1) defining a combustion chamber (E) configured to generate a swirl flow and comprising:
a fuel injection valve that injects fuel to the combustion chamber (E), a plurality of injection holes (61) being provided in the fuel injection valve (6); and
a piston (7) including a cavity (71) exposed to the combustion chamber (E), wherein the cavity (71) includes a bottom wall surface (712) having a shape which changes its height in the direction of the swirl flow, **characterised in that**
for two adjacent injection holes (611) respectively injecting the fuel to adjacent regions of the combustion chamber (E) in which angular velocities of the swirl flow are relatively lower and then higher in a rotational direction of the swirl flow, an injection hole interval between the two adjacent injection holes (611) is set to be smaller than a reference interval, the region in which the angular velocity of the swirl flow is lower is adjacent to a first portion of the bottom wall surface (712), the region in which the angular velocity of the swirl flow is higher is adjacent to a second portion of the bottom wall surface (712), and a gradient of the bottom wall surface (712) changing, in the direction of the swirl flow, is greater in the first portion than in the second portion, and
for two adjacent injection holes (611) respectively injecting the fuel to adjacent regions of the combustion chamber (E) in which angular velocities of the swirl flow are relatively higher and then lower in the rotational direction of the swirl flow, an injection hole interval between the two adjacent injection holes (611) is set to be greater than the reference interval, the region in which the angular velocity of the swirl flow is higher is adjacent to the second portion of the bottom wall surface (712), the region in which the angular velocity is lower is adjacent to an intermediate portion of the bottom wall surface (712), and a gradient of the bottom wall surface (712) changing, in the direction of the swirl flow, is smaller in the second portion than in the intermediate portion.

## Patentansprüche

1. Ein Motor (1) mit interner Verbrennung, der eine Verbrennungskammer (E) definiert, die dazu konfiguriert ist, eine Strudelströmung zu erzeugen, und der aufweist:
ein Kraftstoffinjektionsventil, das einen Kraftstoff zu der Verbrennungskammer (E) injiziert, wobei eine Vielzahl an Injektionslöchern (61) in dem Kraftstoffinjektionsventil (6) vorgesehen ist, und
einen Kolben (7), der eine zu der Verbrennungskammer (E) exponierte Kavität (71) beinhaltet,
wobei
die Kavität (71) eine Bodenwandoberfläche (712) beinhaltet, die eine Form aufweist, welche ihre Höhe in der Richtung der Strudelströmung ändert,
**dadurch gekennzeichnet, dass**
für zwei benachbarte Injektionslöcher (611), die jeweils den Kraftstoff zu benachbarten Regionen der Verbrennungskammer (E) injizieren, in welchen Winkelgeschwindigkeiten der Strudelströmung in einer Rotationsrichtung der Strudelströmung relativ geringer und dann höher sind, ein Injektionslochintervall zwischen den zwei benachbarten Injektionslöchern (611) eingestellt ist, um kleiner als ein Referenzintervall zu sein, wobei die Region, in welcher die Winkelgeschwindigkeit der Strudelströmung geringer ist, zu einem ersten Bereich der Bodenwandoberfläche (712) benachbart ist, wobei die Region, in welcher die Winkelgeschwindigkeit der Strudelströmung höher ist, zu einem zweiten Bereich der Bodenwandoberfläche (712) benachbart ist, und wobei ein Gradient der Bodenwandoberfläche (712), der sich in der Richtung der Strudelströmung ändert, in dem ersten Bereich größer als in dem zweiten Bereich ist, und
für zwei benachbarte Injektionslöcher (611), die jeweils den Kraftstoff zu benachbarten Regionen der Verbrennungskammer (E) injizieren, in welchen Winkelgeschwindigkeiten der Strudelströmung in der Rotationsrichtung der Strudelströmung relativ höher und dann geringer sind, ein Injektionslochintervall zwischen den zwei benachbarten Injektionslöchern (611) eingestellt ist, um größer als das Referenzintervall zu sein, wobei die Region, in welcher die Winkelgeschwindigkeit der Strudelströmung höher ist, zu dem zweiten Bereich der Bodenwandoberfläche (712) benachbart ist, wobei die Region, in welcher die Winkelgeschwindigkeit geringer ist, zu 29.06.2017 einem Zwischenbereich der Bodenwandoberfläche (712) benachbart ist, und wobei ein Gradient der Bodenwandoberfläche (712), der sich in der Richtung der Strudelströmung ändert, in dem zweiten Bereich kleiner als in dem Zwischenbereich ist.

## Revendications

1. Moteur à combustion interne (1) définissant une chambre de combustion (E) configurée pour générer un écoulement tourbillonnaire et comprenant :
une soupape d'injection de carburant qui injecte du carburant vers la chambre de combustion (E), une pluralité de trous d'injection (61) étant placés dans la soupape d'injection de carburant (6) ; et
un piston (7) incluant une cavité (71) exposée vers la chambre de combustion (E),
où la cavité (71) inclut une surface de paroi inférieure (712) ayant une forme qui change de hauteur dans la direction de l'écoulement tourbillonnaire,
**caractérisé en ce que**
pour deux trous d'injection (611) adjacents injectant respectivement le carburant dans des régions adjacentes de la chambre de combustion (E) dans lesquelles des vitesses angulaires de l'écoulement tourbillonnaire sont relativement inférieure et ensuite supérieure dans une direction de rotation de l'écoulement tourbillonnaire, un intervalle de trous d'injection entre les deux trous d'injection adjacents (611) est réglé pour être plus petit qu'un intervalle de référence, la région dans laquelle la vitesse angulaire de l'écoulement tourbillonnaire est inférieure est adjacente à une première partie de la surface de paroi inférieure (712), la région dans laquelle la vitesse angulaire de l'écoulement tourbillonnaire est supérieure est adjacente à une seconde partie de la surface de paroi inférieure (712), et un gradient de changement de la surface de paroi inférieure (712), dans la direction de l'écoulement tourbillonnaire, est plus grand dans la première partie que dans la seconde partie, et
pour deux trous d'injection adjacents (611) injectant respectivement le carburant vers des régions adjacentes de la chambre de combustion (E) dans lesquelles des vitesses angulaires de l'écoulement tourbillonnaire sont relativement supérieure et ensuite inférieure dans la direction de rotation de l'écoulement tourbillonnaire, un intervalle de trous d'injection entre les deux trous d'injection adjacents (611) est réglé pour être plus grand que l'intervalle de référence, la région dans laquelle la vitesse angulaire de l'écoulement tourbillonnaire est plus grande est adjacente à la seconde partie de la surface de paroi inférieure (712), la région dans laquelle la vitesse angulaire de l'écoulement tourbillonnaire est plus petite est adjacente à une partie intermédiaire de la surface de paroi inférieure (712), et un gradient de changement de la surface de paroi inférieure (712), dans la direction de l'écoulement tourbillonnaire, est plus petit dans la seconde partie que dans la partie intermédiaire.
